# EUROPEAN PATENT SPECIFICATION

(11) **EP 0 960 519 B1**
(45) Date of publication and mention of the grant of the patent: **27.04.2005**
(21) Application number: 98904463.1
(22) Date of filing: 02.02.1998
(51) Int. Cl.: H04M 3/08, H04Q 3/00

(54) **A RELIABLE TELECOMMUNICATION NETWORK INCLUDING TELEPHONE EXCHANGES AND DATABASES**
BETRIEBSSICHERES TELEKOMMUNIKATIONSNETZWERK MIT FERNSPRECHVERMITTLUNGSANLAGEN UND DATENBANKEN
RESEAU DE TELECOMMUNICATION FIABILISE INTEGRANT DES CENTRAUX TELEPHONIQUES ET DES BASES DE DONNEES

(30) Priority: 13.02.1997 SE 9700494
(43) Date of publication of application: 01.12.1999
(73) Proprietor: Telia AB (publ), 123 86 Farsta (SE)
(72) Inventor: ALEXANDERSSON, Robert, S-824 41 Hudiksvall (SE); LUNDSTRÖM, Jens, S-941 46 Pitea (SE)
(74) Representative: Akerman, Marten Lennart
(86) International application number: PCT/SE1998/000149
(87) International publication number: WO 1998/036547

(56) References cited:
- EP-A- 0 645 939
- WO-A-82/02784
- PATENT ABSTRACTS OF JAPAN, Vol. 15, No. 394, (E-1119); & JP,A,03 159 396 (NEC CORP) 9 July 1991.

## Description

The present invention relates to a telecommunications network incorporating a multiplicity of telephone exchanges and a plurality of identical databases, in which each telephone exchange is adapted to dynamically select which database it shall access, telephone exchanges for use in such a telecommunications network, databases for use in such a telecommunications network and methods of operating such a telecommunications network.

In modern telecommunications systems and networks, the operation of telephone exchanges requires that they have access to substantial amounts of data, for example, subscriber profiles, or called profiles. This data is held on databases stored on servers, which may be remote from the telephone exchanges. A telecommunications network may include a multiplicity of telephone exchanges, say 270, and a plurality of databases, say 13. Each database (server) must serve several telephone exchanges (clients) in a client-server relationship. Furthermore, the data stored on each database must be identical. At a given time, each telephone exchange accesses one database. The data stored on the databases is updated infrequently, but is vital to the correct operation of the telephone exchanges, e.g. it may be used in call set-up (B-number analysis). This means that each exchange will need to make a large number of short read accesses to its associated database. In an ideal system, or network, each exchange will make roughly the same number of database accesses in a given period of time. It is important that the access load is uniformly distributed over each of the databases.

A data network using a plurality of identical databases, only one of which is active at any given time, the others remaining in a passive state, is disclosed in WO 82/02784 A.

There are a number of problems associated with the operation of telephone networks of this type, for example:
a. How and where are decisions relating to the assignment of a database to a given exchange made?
b. What happens when a given database goes down?
c. How will the loading on each database be managed?
d. How will a database that has been off-line be re-integrated into the network?
e. How can inconsistencies between the data stored on different databases be avoided, especially when updates are made during the period in which one, or more, databases are down?
f. What sort of algorithm/architecture can handle the high database accessibility required by a large number of telephone exchanges?

The present invention relates to solutions for these problems.

The present invention is, in part, based on the realisation that, in a telephone network, it is possible to provide the clients (telephone exchanges) with more information on the overall system architecture than is possible in a conventional client/server relationship because the number of exchanges served by the plurality of databases is known and fairly static.

Most existing database systems, in which there are a plurality of replicated databases, do not handle the problem of redistributing clients when a database fails. In those systems which do address this problem, client redistribution is often handled statically in accordance with a predetermined priority order. Attempts have been made to handle client redistribution dynamically, in an optimal manner, without much success. The primary reason for the failure of optimal dynamic client redistribution is that the problem to be solved is, in reality, a very difficult combinatorial problem. It should be noted that the present invention avoids the use of optimal dynamic solutions and, therefore, the need to solve this combinatorial problem. In fact, the present invention uses a simple re-randomisation of clients over the available databases which provides a good heuristic approximation to the optimisation problem.

Preferred embodiments of the present invention are defined in the independent claims. Further details are provided in the dependent claims.

According to a first aspect of the present invention, there is provided a telecommunications network, including a multiplicity of telephone exchanges, m, and a plurality of identical databases, n, where m is substantially greater than n, in which each telephone exchange is adapted, at a given time, to access one database, characterised in that each telephone exchange has information specifying an address and status for each database in the telecommunications network, and in that the database accessed by that telephone exchange, is selected on a dynamic basis by that telephone exchange.

The database that will be accessed, at a given time, by each telephone exchange, may be selected on a random dynamic basis.

When a database selected by a telephone exchange fails, or goes down, the telephone exchange may be adapted to select a new database on a random basis.

Each telephone exchange may be initially associated with a preferred, or primary, database.

Said m telephone exchanges may be associated with preferred databases on a random basis, in such a manner that each database has a substantially similar loading in terms of access transactions addressed thereto.

When a database that has failed comes on line, each telephone exchange that has that database designated as its primary database, may be adapted to reselect that database for data access operations.

Each telephone exchange may have means for identifying when its primary database is unavailable, means for identifying which databases in the telecommunications network are available, and means for detecting when a database which has been unavailable, becomes available.

When said telecommunications network is partitioned into a first and second partition, as a result of a communications failure, such that databases in said first partition cae may have means for enabling that database to determine how many telephone exchanges are able to access the database, and in that means may be provided for inhibiting updates to said database, in said first partition, when only half, or less, of the telephone exchanges in said telecommunications network are able to access the database.

If said second partition includes more than half said telephone exchanges, and said second partition is further partitioned, as a result of a communications failure, into third and fourth partitions, and a majority of the telephone exchanges in said second partition are within said third partition, means may be provided for inhibiting updates to databases operating in said fourth partition.

Means may be provided to ensure that, when a database that has failed, or has been within an isolated partition of said telecommunications network, is about to return to full operational effectiveness, said database is initialised so that its contents are identical with another database, within said telecommunications network, that is currently fully operational, before any telephone exchange is permitted to access said database.

Each telephone exchange in said telecommunications network may carry a record, for each database in said telecommunications network, including, for each database, a name, an address and a status flag, where the name is a logical name for the database and the status flag indicates whether, or not, the database is currently accessible from a given telephone exchange.

Said address may be an IP address.

Each telephone exchange in said network may be adapted to operate a heart beat process which continuously monitors a heartbeat transmitted by each database in said network and, if there is a change of status for a given database, modifies the status flag in the record for that database.

Each telephone exchange in said telecommunications network may be adapted, in the event of a change of status of a database which is a Current_Node for a given telephone exchange, to select a new Current_Node according to the following rule:
Current_Node = {N if N.STATUS = UP, else randomly select a new database among all t, where t.STATUS = UP}
where N denotes the primary database for the telephone exchange, N.STATUS is the status flag for database N in the record of databases held at the telephone exchange, t denotes a given one of the databases in the telecommunications network, other than N, and t.STATUS denotes the status flag for the record of database t held at the telephone exchange.

Said telecommunications system may be adapted to operate a free-number system, and in that said databases may include a concordance record, for each subscriber to said telecommunications network, linking a logical number used by others to initiate calls to a subscriber, and a physical number used by the telecommunications network to identify an access point for that subscriber.

According to a second aspect of the present invention, there is provided, a telephone exchange, adapted to operate within a telecommunications network, including a multiplicity of telephone exchanges, m, and a plurality of identical databases, n, where m is substantially greater than n, said telephone exchange being arranged so that, at a given time, it can access a single database, characterised in that said telephone exchange has information specifying an address and status for each database in the telecommunications network, and in that the database that will be accessed by the telephone exchange is selected by the telephone exchange on a dynamic basis.

According to a third aspect of the present invention, there is provided a database, adapted to operate within a telecommunications network, including a multiplicity of telephone exchanges, m, and a plurality of identical databases, n, where m is substantially greater than n, said telephone exchanges being arranged so that, at a given time, each telephone exchange can access a single database, characterised in that when said telecommunications network is partitioned into a first and second partition, as a result of a communications failure, such that databases in said first partition cannot be accessed from telephone exchanges in said second partition, said database having means for determining how many telephone exchanges are able to access it, and in that means are provided for inhibiting updates to said database when only half, or less, of the telephone exchanges in said telecommunications network are able to access it.

According to a fourth aspect of the present invention, there is provided a method comprising a multiplicity of telephone exchanges, m, and a plurality of identical databases, n, where m is substantially greater than n, in which each telephone exchange is adapted, at a given time, to access one database, characterised by providing each telephone exchange with information specifying an address and status for each database in the telecommunications network, and each telephone exchange dynamically selecting the database that it will access.

Each telephone exchange may select the database that it will access, at a given time, on a random dynamic basis.

A telephone exchange, when a database selected by that telephone exchange fails, or goes down, may select a new database on a random basis.

Each telephone exchange may initially be associated with a preferred, or primary, database.

Each of said m telephone exchanges may be associated with a preferred database, on a random basis, in such a manner that each database has a substantially similar loading in terms of access transactions addressed thereto.

When a database that has failed comes on line, each telephone exchange that has that database designated as its primary database, may reselect that database for data access operations.

Each exchange may identify when its primary database is unavailable, identify which databases in the telecommunications network are available, and detect when a database which has been unavailable, becomes available.

When said telecommunications network is partitioned into a first and second partition, as a result of a communications failure, such that databases in said first partition cannot be accessed from telephone exchanges in said second partition, each database may determine how many telephone exchanges are able to access it, and updates to said database may be inhibited when only half, or less, of the telephone exchanges in said telecommunications network are able to access the database.

If said second partition includes more than half said telephone exchanges, and said second partition is further partitioned, as a result of a communications failure, into third and fourth partitions, and a majority of the telephone exchanges in said second partition are within said third partition, updates to a database may be inhibited.

When a database that has failed, or has been within an isolated partition of said telecommunications network, is about to return to full operational effectiveness, said database may be initialised so that its contents are identical with another database within said telecommunications network that is currently fully operational, before any telephone exchange is permitted to access said database.

Each telephone exchange in said telecommunications network may carry a record, for each database in said telecommunications network, including, for each database, a name, an address and a status flag, where the name is a logical name for the database and the status flag indicates whether, or not, the database is currently accessible from a given telephone exchange.

Each telephone exchange in said network may operate a heart beat process which continuously monitors a heartbeat transmitted by each database in said network and, if there is a change of status for a given database, may modify the status flag in the record for that database.

Each telephone exchange in said telecommunications network, in the event of a change of status of a database which is a Current_Node for a given telephone exchange, may select a new Current_Node according to the following rule:
Current_Node = {N if N.STATUS = UP, else randomly select a new database among all t, where t.STATUS = UP}
where N denotes the primary database for the telephone exchange, N.STATUS is the status flag for database N in the record of databases held at the telephone exchange, t denotes a given one of the databases in the telecommunications network, other than N, and t.STATUS denotes the status flag for the record of database t held at the telephone exchange.

According to a fifth aspect of the present invention, there is provided a telecommunications system characterised in that it includes a telecommunications network, or a telephone exchange, or a database, or operates in accordance with a method, as set forth in any preceding paragraph.

Embodiments of the invention will now be described, by way of example, with reference to the accompanying drawings, in which:
Figure 1 illustrates a simplified example of a telecommunications network, according to the present invention, in which all database servers are operational.
Figure 2 illustrates the telecommunications network of Figure 1, after one of the databases has gone down.

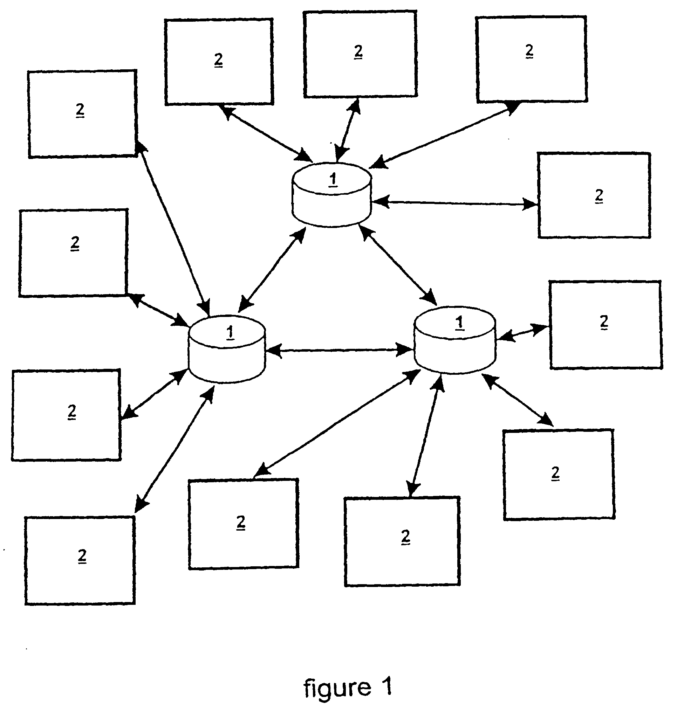

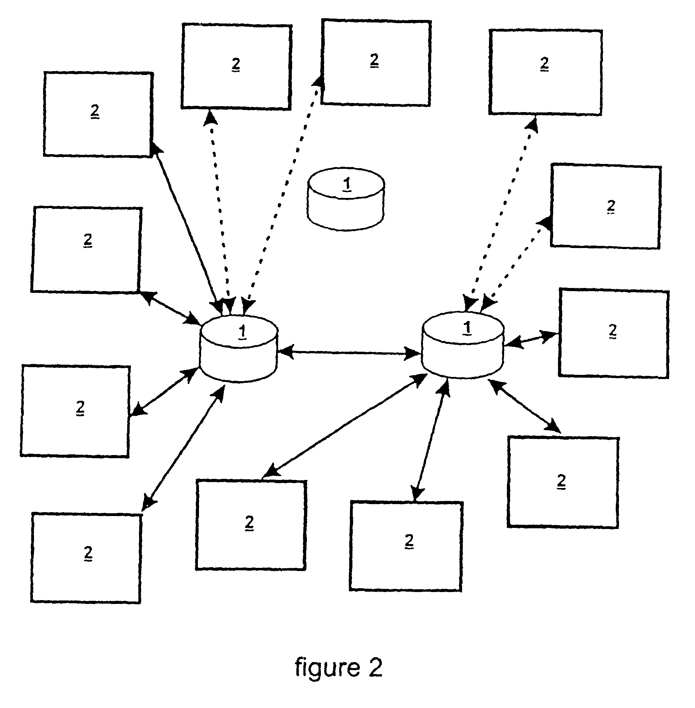

Figure 1 shows a simplified telecommunications network comprising twelve telephone exchanges, 2, served by three database servers, 1. As will be apparent from the drawing, each exchange, 2, is served by a single database, 1, and each of the databases can communicate with every other database. If one of the database servers fails, for some reason, as shown in Figure 2, it is necessary to reassign operating databases to the telephone exchanges which were originally served by the failed database server. The assignment of a new database to a telephone exchange, as a result of database server failure, is temporary and needs to be reversed when the failed server becomes operational again. The use of multiple replicated databases provides a degree of redundancy which enhances the accessibility of operationally vital data, by exchanges.

The telecommunications network described with reference to Figures 1 and 2 is a highly simplified version of a real network. A real telecommunications network may include a very large number of telephone exchanges, e.g. 270, and significantly more database servers than are shown in the drawings, e.g. 13. The precise physical location of the database servers is a matter of convenience, they may be located at network management centres, or in the same buildings as telephone exchanges. The point is that they operate independently of the telephone exchanges and are distinct network elements in their own right.

The decision, as to which database a given exchange will be associated with, i.e. which database an exchange will access when it requires data, e.g. for a call set-up operation, is made dynamically by the telephone exchange. This means that, provided there are a significant number of exchanges in the network and the number of exchanges is substantially larger than the number of databases, the distribution of exchanges to databases will be randomised and, on average, each database will carry an approximately equal load. By locating database selection decisions with the client (telephone exchange), a client can select and access a new database if, for any reason, its connection to an initially selected database fails. This meets the requirement that, in the event of a database failure, exchanges associated with the failed database can rapidly acquire access to an operational database.

If there are a total of n databases in the telecommunications network, two of which fail, there will be a total n - 2 databases to meet the requirements of all the telephone exchanges in the system, say m, where m >> n. To determine a redistribution of n - 2, or fewer, if more than two databases have failed, is a difficult optimisation problem to handle in a mathematically precise manner.

Initially, i.e. when all databases are operational, each exchange has a primary database which it accesses. This may be preassigned, or randomly selected, by each exchange. Suppose that one of the databases in the telecommunications network fails. All the telephone exchanges for which the failed database was the primary database are then distributed at random among the operational databases. This can be considered as the equivalent to each reassigned exchange temporarily taking a new primary database, if its original primary database fails. As databases progressively fail, exchanges proceed to take new primary databases as long as possible. When a database which has failed comes on line again, all exchanges which had that database as their original primary database commence accessing it again, i.e. the newly on-line database is restored as the primary database for those exchanges for which it was initially a primary database. This means that those exchanges whose primary database is still down will remain randomly distributed among databases which are accessible. It should be noted that a newly restored database will not carry any exchanges in addition to those for which it is an initial primary database, i.e. if two databases failed, and one was restored, the restored database will carry its original load while the remaining operational databases will all carry an excess load. This ensures that as the databases start functioning again the original distribution of databases to the exchanges is progressively restored. However, it does mean that a temporary inequality of loads may occur. This will automatically be rectified as either more databases come on-line, or more databases fail.

This requires that each exchange:
- can detect when a database which is, for the time being, its primary database, has become unavailable;
- knows which of the other databases in the telecommunications network are available; and
- detects when a database, which has become unavailable, becomes available again.

Consider two replicated databases, DB1 and DB2, i.e. the two databases are exact copies of each other. Clients, i.e. telephone exchanges, can access either of the databases, i.e. the client load is equally divided between the two databases. The exchanges both read and write to the databases. Updating and "concurrency control" is achieved by the exchange of information between the database servers. The following three failure modes can occur:
1. one of the databases fails;
2. a communication error results in the databases each being able to serve only a given sub-set of the clients, i.e. each database becomes located in a partitioned portion of the telecommunications network; and
3. both databases fail.

In case (1), the database remaining in operation should be able to supply data to all clients, including those who originally had access to the failed database.

In case (2), it will appear from the viewpoint of DB1, that DB2 has failed, and from the point of view of DB2, that DB1 has failed, because the two databases will no longer be able to communicate with each other. The problem is:
"How does a database decide whether the other database has failed, or there is merely a communications error?"

In reality, neither database can decide if the other database has failed, or there is a communications error. In particular, how will database updates be handled when they cannot be made simultaneously on both databases?

In some known database systems an optimistic view of the problem is taken and DB1 and DB2 are permitted to operate independently of each other. Inconsistencies, if any, that arise in the data, i.e. updates made to the same data elements in each database, are resolved, after communication between the databases is restored, by using an appropriate algorithm, equivalent to an operator studying log files. Other systems define a "master-database" which is always allowed to function, alone if necessary, i.e. updates are only permitted after they have been entered on the master-database.

In both cases (1) and (2), the only real problem is the management of updates.

Two other problems associated with this example are:
- if both databases have failed, case (3), how can start-up be achieved in a controlled manner when both databases are restored?
- how does a database that has failed know that it has failed and that it must be re-initialised, i.e. its data reconciled with the data held by the database that has remained operational, before clients can be permitted to access it?

These problems can be overcome by giving clients, i.e. telephone exchanges, information on the way in which the system functions and identifying all clients to the databases. The clients thus know if any of the databases are inaccessible.

If one of the databases, e.g. DB1, has failed, or is temporally located in an inaccessible partition of the network, updates to it are permitted provided that it can communicate with more than half the total number of clients. In this situation the DB1 will be registered with all accessible clients as be "down". This tells clients that they should, if possible, access DB2, because the most current information is available on this database.

This methodology avoids any database operating as a master-database in an isolated network partition, thereby eliminating the risk of inconsistencies between databases occurring, while at the same time permitting the database which can be accessed by the larger number of clients to continue full operation. A database which has failed will know that it has failed and that it needs to deny clients access until it has re-aligned itself with the fully operational database.

This arrangement also caters for the case in which there are further communications errors, or network partitioning, on the basis of "half the number of half the number" of clients. This will constitute further information on which decisions relating to database access can be managed.

When a single database fails, or finds itself located in a network partition that includes less than half the total number of system clients, the database knows that it has been deemed to have failed and then denies all clients access. This means that all exchanges for which it is the primary database will be denied access and will access another database. Any updates will be communicated to the new, temporary, primary database, and thence will be communicated to all other operational databases. When the database comes on line again, it will, before permitting client access, update itself from any convenient one of the remaining databases. Where several databases fail, because they are isolated within a network partition, during the same period, the same procedure can be used. Voting procedures, when a second database failure occurs, are based on at least half the remaining clients, i.e. half of half the clients. The successful operation of this methodology depends on clients always being able to access at least one database which is accessible to all clients.

In other words, the telecommunications network may, as a result of a communications failure, be partitioned into first and second partitions. Furthermore, it may not be possible to access databases in the first partition from telephone exchanges in the second partition. Each database in the first partition can determine how many telephone exchanges are able to access it and can inhibit updates to said database, when only half, or less, of the telephone exchanges in the telecommunications network are able to access it.

If:
- the second partition includes more than half the telephone exchanges in the network;
- the second partition is further partitioned, as a result of a communications failure, into third and fourth partitions; and
- a majority of the telephone exchanges in said second partition are within said third partition,
then the database will inhibit updates, if it operates in the fourth partition.

Each client (telephone exchange) holds information on each database in the network in the form of n tuples, t, (there are n databases), which consist of <NAME, ADDRESS, STATUS>. NAME corresponds to a logical name for a given database, ADDRESS may, for example, be the IP-address of the named database, and STATUS is a flag which can be set UP, or DOWN, depending on whether, or not, the named database is judged to be accessible from the telephone exchange.

The database, which each telephone exchange accesses as an initial position, i.e. its primary node, is referred to as N. The database to which a telephone exchange currently has access is called the Current_Node and in the initial position Current_Node = N.

In order to handle database access, two processes are required in the exchange, namely:
- a heart beat process (HP); and
- a control process (KP).

The heartbeat process continually monitors which databases are available to the exchange and which are not, i.e. it receives and monitors their heartbeats and sets the t.STATUS flags accordingly. The control process continuously watches for the following triggers:
- Trigger 1
   - Event: updating of any t.STATUS to DOWN
   - Condition: t=N, or Current_Node
   - Action: select new Current_Node;
- Trigger 2
   - Event: updating of any t.STATUS to UP
   - Condition: -
   - Action: select new Current_Node.

If an event occurs in trigger (1), i.e. the heartbeat process detects that a database has gone down, i.e. is no longer accessible, and this has occurred to either the original primary node, N, or a node which is currently the Current_Node, (may be N), then the telephone exchange will change the database which it accesses.

If an event occurs in trigger (2), i.e. the heartbeat process detects that any database has returned to its UP status, then the access of the exchanges must be unconditionally re-distributed on a random basis.

The rule which handles selection of a new Current_Node is that:
Current_Node = [N if N.STATUS =UP; in other cases select randomly a new database among all t where t.STATUS =UP}.

This rule guarantees that as soon as N comes UP it is selected to be the Current_Node, otherwise the telephone exchange randomly selects any other database. When all telephone exchanges randomly select access to databases there is a very small risk of unequal loading of the databases which are UP.

One example of the type of data which a telephone exchange needs to access from databases in the telephone network, to which the present invention relates, is data necessary for implementation of "free-number". With "free-number", a subscriber can keep his/her directory number (Knr) when moving, or changing access-form. This requires a separation between a logical number (Knr) and a physical number (Fnr). When a call is set up a telephone exchange uses a free-number database to translate the dialled number, Knr, into a logical number. Fnr, which is used for call routing.

A Fnr can be considered to consist of a station prefix (Snr) + Knr, where Snr is used to route the call to the correct telephone exchange. When the Fnr is received at the correct telephone exchange, Knr is translated into the appropriate access point for the called subscriber. Alternatively, an Fnr can be used which uniquely and directly identifies the access point for a given subscriber. In this case, Fnr is entirely separate from Knr and the receiving exchange does not need to perform a further translation in order to connect an incoming call.

Many modem telecommunications networks employ user specific data, referred to as "called profiles", stored in the telephone exchange to which the user is connected. Current trends are to store called profiles on databases remote from telephone exchanges, as in the case of the present invention. This means that when a subscriber moves, information held in databases will need to be updated and/or the "called profile" for that subscriber must be moved to a new exchange.

To avoid inconsistent data, which can result in wrongly connected telephone calls while a subscriber is in the process of moving, it is important that updating is performed in a controlled manner.

Four different updating procedures are described below.
1) Updating Procedure when Called Profile is held at the telephone exchange and the telephone number is of the form Snr + Knr:
   1. Copy profile to new exchange and update the concordance of Knr to the appropriate access point in this exchange.
   2. Update the concordance Knr = Snr in the free-number database.
   3. Remove the information from the old exchange.
2) Updating Procedure when Called Profile is held at the telephone exchange and the telephone number is a unique Fnr:
   1. Copy profile to new exchange.
   2. Update the concordance Knr = Fnr in the free-number database.
   3. Remove the information from the old exchange.
3) Updating Procedure when Called Profile is held on a database external to the telephone exchange and the telephone number is of the form Snr + Knr:
   1. Update the concordance of Knr to the access point in the new exchange.
   2. Update the concordance Knr = Snr in the free-number database.
   3. Remove the information in the old exchange.
4) Updating Procedure when Called Profile is held on a database external to the telephone exchange and the telephone number is a unique Fnr:
   1. Update the concordance Knr = Fnr.

The invention herein described is concerned with the architecture and operation of a telecommunications network which includes a multiplicity of telephone exchanges and a plurality of identical replicated databases which are accessed by the telephone exchanges. The following inventive features can be identified, among others, in the present invention:
- the selection of the database which will be accessed by a given telephone exchange is made by that telephone exchange;
- when the database selected by a telephone exchange is down, an alternative database is selected by that exchange on a random basis:
- when an exchange's primary database comes on line, after having been down, the exchange reverts to accessing that database; and
- each exchange in the network maintains a record of all databases in the network, together with the up-down status of those databases.

## Claims

1. A telecommunications network, including a multiplicity of telephone exchanges (2), m, and a plurality of identical databases (1), n, where m is greater than n, in which each telephone exchange (2) is adapted, at a given time, to access one database (1), each telephone exchange (2) has information specifying an address and status for each database (1) in the telecommunications network, and, the database (1) accessed by a telephone exchange (2), is selected on a dynamic basis by that telephone exchange (2) **characterised in that** each telephone exchange (2) is arranged to supervise which databases (1) are accessible to said telephone exchange (2) and that the database (1) to be accessed is chosen by the telephone exchange (2).

2. A telecommunications network, as claimed in claim 1, **characterised in that** the database that will be accessed, at a given time, by each telephone exchange, is selected on a random dynamic basis.

3. A telecommunications network, as claimed in claim 1, or claim 2, **characterised in that** when a database selected by a telephone exchange fails, or goes down, the telephone exchange is adapted to select a new database on a random basis.

4. A telecommunications network, as claimed in any previous claim, **characterised in that** each telephone exchange is initially associated with a preferred, or primary, database.

5. A telecommunications network, as claimed in any previous claim, **characterised in that** said m telephone exchanges are associated with preferred databases on a random basis, in such a manner that each database has a similar loading in terms of access transactions addressed thereto.

6. A telecommunications network, as claimed in claim 4, or claim 5 when dependent on claim 4, **characterised in that** when a database that has failed comes on line, each telephone exchange, that has that database designated as its primary database, is adapted to reselect that database for data access operations.

7. A telecommunications network, as claimed in claim 5, or claim 6, **characterised in that** each telephone exchange has means for identifying when its primary database is unavailable, means for identifying which databases in the telecommunications network are available, and means for detecting when a database which has been unavailable, becomes available.

8. A telecommunications network, as claimed in any previous claim, **characterised in that** when said telecommunications network is partitioned into a first and second partition, as a result of a communications failure, such that databases in said first partition cannot be accessed from telephone exchanges in said second partition, each database has means for enabling that database to determine how many telephone exchanges are able to access the database, and **in that** means are provided for inhibiting updates to said database, in said first partition, when only half, or less, of the telephone exchanges in said telecommunications network are able to access the database.

9. A telecommunications network, as claimed in claim 8, **characterised in that** if said second partition includes more than half said telephone exchanges, and said second partition is further partitioned, as a result of a communications failure, into third and fourth partitions, and a majority of the telephone exchanges in said second partition are within said third partition, means are provided for inhibiting updates to databases operating in said fourth partition.

10. A telecommunications network as claimed in either claim 8, or 9, **characterised in that** means are provided to ensure that, when a database that has failed, or has been within an isolated partition of said telecommunications network, is about to return to full operational effectiveness, said database is initialised so that its contents are identical with another database, within said telecommunications network, that is currently fully operational, before any telephone exchange is permitted to access said database.

11. A telecommunications network, as claimed in any previous claim, **characterised in that** each telephone exchange in said telecommunications network is adapted to carry a record, for each database in said telecommunications network, including, for each database, a name, an address and a status flag, where the name is a logical name for the database and the status flag indicates whether, or not, the database is currently accessible from said telephone exchange.

12. A telecommunications network, as claimed in claim 11, **characterised in that** said address is an IP address.

13. A telecommunications network, as claimed in either claims 11, or claim 12, **characterised in that** each telephone exchange in said network is adapted to operate a heart beat process which continuously monitors a heartbeat transmitted by each database in said network and, if there is a change of status for a given database, is adapted to modify the status flag in the record for that database.

14. A telecommunications network, as claimed in claim 11, **characterised in that** each telephone exchange in said telecommunications network is adapted, in the event of a change of status of a database which is a Current_Node for said telephone exchange, to select a new Current_Node according to the following rule:
Current_Node = {N if N.STATUS = UP, else randomly select a new database among all t, where t.STATUS = UP}
where N denotes the primary database for the telephone exchange, N.STATUS is the status flag for database N in the record of databases held at the telephone exchange, t denotes a given one of the databases in the telecommunications network, other than N, and t.STATUS denotes the status flag for the record of database t held at the telephone exchange.

15. A telecommunications network, as claimed in any previous claim, **characterised in that** said telecommunications system is adapted to operate a free-number system, and **in that** said databases include a concordance record, for each subscriber to said telecommunications network, linking a logical number used by others to initiate calls to a subscriber, and a physical number used by the telecommunications network to identify an access point for that subscriber.

16. A telephone exchange (2), adapted to operate within a telecommunications network, including a multiplicity of telephone exchanges, m, and a plurality of identical databases (1), n, where m is greater than n, said telephone exchange (2) being arranged so that, at a given time, it is adapted to access a single database (1), said tetephone exchange (2) has information specifying an address and status for each database (1) in the telecommunications network, and the database (1) that will be accessed by the telephone exchange (2) is selected by the telephone exchange (2) on a dynamic basis, **characterised in that** the telephone exchange (2) is arranged to supervise which databases (1) are accessible to it and that the database (1) to be accessed is chosen by the telephone exchange (2).

17. A telephone exchange, as claimed in claim 16, **characterised in that** the database that will be accessed, at a given time, by said telephone exchange, is selected on a random dynamic basis.

18. A telephone exchange, as claimed in claim 16, or claim 17, **characterised in that** when a database selected by the telephone exchange fails, or goes down, the telephone exchange is adapted to select a new database on a random basis.

19. A telephone exchange, as claimed in any of claims 16 to 18, **characterised in that** said telephone exchange is initially associated with a preferred, or primary, database.

20. A telephone exchange, as claimed in claim 19, **characterised in that** when a database that has failed comes on line, and if that database was designated as the primary database for said telephone exchange, said telephone exchange is adapted to reselect that database for data access operations from said telephone exchange.

21. A telephone exchange, as claimed in claim 19, or 20, **characterised in that** said exchange has means for identifying when its primary database is unavailable, means for identifying which databases in the telecommunications network are available, and means for detecting when a database which has been unavailable, becomes available.

22. A telephone exchange, as claimed in of claims 16 to 21, **characterised in that** said telephone exchange is adapted to carry a record, for each database in said telecommunications network, including, for each database, a name, an address and a status flag, where the name is a logical name for the database and the status flag indicates whether, or not, the database is currently accessible from said telephone exchange.

23. A telephone exchange, as claimed in claim 22, **characterised in that** said address is an IP address.

24. A telephone exchange, as claimed in either of claims 22, or claim 23, **characterised in that** said telephone exchange is adapted to operate a heart beat process which continuously monitors a heartbeat transmitted by each database in said network and, if there is a change of status for a given database, it is adapted to modify the status flag in the record for that database.

25. A telephone exchange, as claimed in claim 24, **characterised in that** said telephone exchange is adapted, in the event of a change of status of a database which is a Current_Node for the telephone exchange, to select a new Current_Node according to the following rule:
Current_Node = {N if N.STATUS = UP, else randomly select a new database among all t, where t.STATUS = UP}
where N denotes the primary database for the telephone exchange, N.STATUS is the status flag for database N in the record of databases held at the telephone exchange, t denotes a given one of the databases in the telecommunicaitons network, other than N, and t.STATUS denotes the status flag for the record of database t held at the telepnone exchange.

26. A database (1), adaped to operate within a telecommunications network, including a multiplicity of telephone exchanges (2), m, and a plurality of identical databases (1), n, where m is greater than n, said telephone exchanges (2) being arranged so that, at a given time, each telephone exchange (2) can access a single database (1), **characterised in that** it is arranged to give a signal of state which informs that this database (1) is accessible to a telephone exchange (2) which is able to receive this signal of state when said telecommunications network is partitioned into a first and second partition, as a result of a communications failure, such that databases (1) in said first partition cannot be accessed from telephone exchanges (2) in said second partition, said database (1) having means for determining how many telephone exchanges (2) are able to access it, and **in that** means are provided for inhibiting updates to said database (1) when only half, or less, of the telephone exchanges (2) in said telecommunications network are able to access it.

27. A database, as claimed in claim 26, **characterised in that** if said second partition includes more than half said telephone exchanges, and said second partition is further partitioned, as a result of a communications failure, into third and fourth partitions, and a majority of the telephone exchanges in said second partition are within said third partition, means are provided for inhibiting updates to said database if it is operating in said fourth partition.

28. A database, as claimed in claim 26, or claim 27, **characterised in that** means are provided to ensure that, when said database that has failed, or been within an isolated partition of said telecommunications network, and is about to return to full operational effectiveness, said database is initialised so that its contents are identical with another database, within said telecommunications network, that is currently fully operational, before any telephone exchange is permitted to access said database.

29. A method of operating a telecommunications system comprising a multiplicity of telephone exchanges (2) m, and a plurality of identical databases (1) n, where m is greater than n, in which each telephone exchange (2) is adapted, at a given time, to access one database (1), providing each telephone exchange (2) with information specifying an address and status for each database (1) in the telecommunications network, **characterised in** the steps of each telephone exchange (2) supervising which databases (1) are accessable to said telephone exchange (2), and each telephone exchange (2) dynamically selecting the database (1) that it will access.

30. A method as claimed in claim 29, **characterised by** each telephone exchange selecting the database that it will access, at a given time, on a random dynamic basis.

31. A method, as claimed in claim 29, or 30, **characterised by** a telephone exchange, when a database selected by that thelephone exchange fails, or goes down, selecting a new database on a random basis.

32. A method, as claimed in any claims 29 to 31, **characterised by** initially associating each telephone exchange with a preferred, or primary, database.

33. A method, as claimed in any of claim 29 to 32, **characterised by** associating each of said m telephone exchanges with a preferred database, on a random basis, in such a manner that each database has a similar loading in terms of access transactions addressed thereto.

34. A method, as claimed in claim 32, or claim 33, when dependent on claim 32, **characterised in that** when a database that has failed comes on line, each telephone exchange that has that database designated as its primary database, reselects that database for data access operations.

35. A method, as claimed in claim 33, or claim 34, **characterised by** each exchange identifying when its primary database is unavailable, identifying which databases in the telecommunications network are available, and detecting when a database which has been unavailable, becomes available.

36. A method, as claimed in any of claims 29 to 35, **characterised in that** when said telecommunications network is partitioned into a first and a second partition, as a result of a communications failure, such that databases in said first partition cannot be accessed from telephone exchanges in said second partition, each database determining how many telephone exchanges are able to access it, and inhibiting updates to said database when only half, or less, of the telephone exchanges in said telecommunications network are able to access the database.

37. A method, as claimed in claim 36, **characterised by**, if said second partition includes more than half said telephone exchanges, and said second partition is further partitioned, as a result of a communications failure, into third and fourth partitions, and a majority of the telephone exchanges in said second partition are within said third partition, inhibiting updates to databases operating in said fourth partition.

38. A method, as claimed in either claim 36, or 37, **characterised by** ensuring that, when a database that has failed, or has been within an isolated partition of said telecommunications network, is about to return to full operational effectiveness, said database is initialised so that its contents are identical with another database within said telecommunications network that is currently fully operational, before any telephone exchange is permitted to access said database.

39. A method, as claimed in any of claims 29 to 38, **characterised by** each telephone exchange in said telecommunications network carrying a record, for each database in said telecommunications network, including, for each database, a name, an address and a status flag, where the name is a logical name for the database and the status flag indicates whether, or not, the database is currently accessible from said telephone exchange.

40. A method, as claimed in claim 39, **characterised by** said address being an IP address.

41. A method, as claimed in either of claims 39, or 40, **characterised by** each telephone exchange in said network operating a heart beat process which continuously monitors a heartbeat transmitted by each database in said network and, if there is a change of status for a given database, modifying the status flag in the record for that database.

42. A method, as claimed in claim 41, **characterised by** each telephone exchange in said telecommunications network, in the event of a change of status of a database which is a Current_Node for said telephone exchange, selecting a new Current_Node according to the following rule:
Current_Node = {N if N.STATUS = UP, else randomly select a new database among all t, where t.STATUS = UP}
where N denotes the primary database for the telephone exchange, N.STATUS is the status flag for database N in the record of databases held at the telephone exchange, t denotes a given one of the databases in the telecommunications network, other than N, and t.STATUS denotes the status flag for the record of database t held at the telephone exchange.

43. A telecommunications system **characterised in that** it includes a telecommunications network as claimed in any of claims 1 to 15, or includes a telephone exchange as claimed in any of claims 16 to 25, or a database as claimed in of claims 26 to 28.

44. A telecommunications system **characterised in that** it inclucles means adapted to carry out all the steps of a method as claimed in any of claims 29 to 42.

## Patentansprüche

1. Telekommunikationsnetzwerk mit einer Anzahl m Fernsprechvermittlungsanlagen (2) und einer Anzahl n identischer Datenbanken (1), wobei m größer als n ist, wobei jede Fernsprechvermittlungsanlage (2) so ausgebildet ist, dass sie zu einem gegebenen Zeitpunkt auf eine Datenbank (1) zugreifen kann, jede Fernsprechvermittlungsanlage (2) Information hat, die eine Adresse und den Status für jede Datenbank (1) in dem Telekommunikationsnetzwerk spezifiziert, und die Datenbank (1), auf die durch die Fernsprechvermittlungsanlage (2) zugegriffen worden ist, auf einer dynamischen Basis durch die Fernsprechvermittlungsanlage (2) gewählt worden ist,
**dadurch gekennzeichnet, dass** jede Fernsprechvermittlungsanlage (2) so angeordnet ist, dass sie überwacht, welche Datenbanken (1) für die Fernsprechvermittlungsanlage (2) zugreifbar sind, und dass die Datenbank (1), auf welche zugegriffen werden soll, durch die Fernsprechvermittlungsanlage (2) gewählt wird.

2. Telekommunikationsnetzwerk nach Anspruch 1,
**dadurch gekennzeichnet, dass** die Datenbank, auf welche zu einem gegebenen Zeitpunkt durch jede Fernsprechvermittlungsanlage zugegriffen wird, auf einer dynamischen Zufallsbasis gewählt wird.

3. Telekommunikationsnetzwerk nach Anspruch 1 oder 2,
**dadurch gekennzeichnet, dass**, wenn eine durch eine Fernsprechvermittlungsanlage gewählte Datenbank ausfällt oder schlechter wird, die Fernsprechvermittlungsanlage so ausgebildet ist, dass sie auf einer Zufallsbasis eine neue Datenbank wählen kann.

4. Telekommunikationsnetzwerk nach einem der vorstehenden Ansprüche,
**dadurch gekennzeichnet, dass** jeder Fernsprechvermittlungsanlage anfänglich eine bevorzugte oder primäre Datenbank zugewiesen ist.

5. Telekommunikationsnetzwerk nach einem der vorstehenden Ansprüche,
**dadurch gekennzeichnet, dass** m Fernsprechvermittlungsanlagen auf einer Zufallsbasis bevorzugte Datenbanken zugewiesen sind, dergestalt, dass jede Datenbank bezüglich der Zugangstransaktionen, die an diese adressiert sind, eine ähnliche Ladung hat.

6. Telekommunikationsnetzwerk nach Anspruch 4 oder 5, wenn abhängig von Patentanspruch 4, **dadurch gekennzeichnet, dass**, wenn eine ausgefallene Datenbank in die Leitung gelangt, jede Fernsprechvermittlungsanlage, die diese Datenbank als ihre primäre Datenbank bezeichnet hat, diese Datenbank für Datenzugangsoperationen wieder wählen kann.

7. Telekommunikationsnetzwerk nach Anspruch 5 oder 6,
**dadurch gekennzeichnet, dass** jede Fernsprechvermittlungsanlage Mittel zum Identifizieren hat, wann ihre primäre Datenbank nicht zur Verfügung steht, Mittel zum Identifizieren hat, welche der Datenbanken in dem Telekommunikationsnetzwerk zur Verfügung stehen, und Mittel zum Detektieren hat, wann eine Datenbank, die nicht zur Verfügung stand, zur Verfügung gelangt.

8. Telekommunikationsnetzwerk nach einem der vorstehenden Ansprüche,
**dadurch gekennzeichnet, dass** wenn das Telekommunikationsnetz als Ergebnis eines Kommunikationsausfalls in einen ersten und einen zweiten Bereich unterteilt ist, sodass auf Datenbanken in dem ersten Bereich durch Fernsprechvermittlungsanlagen in dem zweiten Bereich nicht zugegriffen werden kann, jede Datenbank Mittel hat, um die Datenbank in die Lage zu versetzen zu bestimmen, wie viele Fernsprechvermittlungsanlagen auf die Datenbank zugreifen können, und dass Mittel vorgesehen sind, um Aktualisierungen der Datenbank in dem ersten Bereich zu unterbinden, wenn nur die Hälfte oder weniger der Fernsprechvermittlungsanlagen in dem Telekommunikationsnetzwerk auf die Datenbank zugreifen können.

9. Telekommunikationsnetzwerk nach Anspruch 8,
**dadurch gekennzeichnet, dass**, wenn der zweite Bereich mehr als die Hälfte der Fernsprechvermittlungsanlagen enthält und der zweite Bereich ferner als Ergebnis eines Kommunikationsausfalls in einen dritten und vierten Bereich unterteilt ist, und eine Mehrheit der Fernsprechvermittlungsanlagen in dem zweiten Bereich innerhalb des dritten Bereichs sind, Mittel vorgesehen sind, um Aktualisierungen der Datenbanken, welche in dem vierten Bereich arbeiten, zu unterbinden.

10. Telekommunikationsnetzwerk nach Anspruch 8 oder 9,
**dadurch gekennzeichnet, dass** Mittel vorgesehen sind, um sicherzustellen, dass, wenn eine Datenbank, die ausgefallen war, oder innerhalb eines isolierten Bereiches des Telekommunikationsnetzwerkes gewesen ist, im Begriff ist, in die vollständige Funktionseffektivität zurückzukehren, dass diese Datenbank initialisiert wird, sodass ihre Inhalte identisch mit einer anderen Datenbank innerhalb des Telekommunikationsnetzwerkes ist, welche derzeit vollständig funktionsfähig ist, bevor irgendeine Fernsprechvermittlungsanlage auf diese Datenbank zugreifen darf.

11. Telekommunikationsnetzwerk nach einem der vorstehenden Ansprüche,
**dadurch gekennzeichnet, dass** jede Fernsprechvermittlungsanlage in dem Telekommunikationsnetzwerk für jede Datenbank in dem Telekommunikationsnetzwerk eine Aufzeichnung durchführen kann, für jede Datenbank einen Namen, eine Adresse und ein Status-Flag enthält, wobei der Name ein logischer Name für die Datenbank ist und das Status-Flag anzeigt, ob auf die Datenbank derzeit von der Fernsprechvermittlungsanlage zugegriffen werden kann oder nicht.

12. Telekommunikationsnetzwerk nach Anspruch 11,
**dadurch gekennzeichnet, dass** die Adresse eine IP-Adresse ist.

13. Telekommunikationsnetzwerk nach Anspruch 11 oder 12,
**dadurch gekennzeichnet, dass** jede Fernsprechvermittlungsanlage in dem Netzwerk so ausgebildet ist, dass sie ein Herzschlagverfahren betreiben kann, das einen Herzschlag, der von jeder Datenbank in dem Netzwerk übertragen wird, kontinuierlich überwachen kann, und wenn bei einer gegebenen Datenbank eine Änderung des Status vorhanden ist, sie in der Lage ist, das Status-Flag in der Aufzeichnung für diese Datenbank zu modifizieren.

14. Telekommunikationsnetzwerk nach Anspruch 11,
**dadurch gekennzeichnet, dass** jede Fernsprechvermittlungsanlage in dem Telekommunikationsnetzwerk so ausgebildet ist, dass sie für den Fall einer Änderung des Status einer Datenbank, die ein Strom_Knoten für diese Fernsprechvermittlungsanlage ist, einen neuen Strom_Knoten gemäß der folgenden Regel wählen kann:
Strom_Knoten = {N wenn N.STATUS = UP, sonst Zufallswählen einer neuen Datenbank unter allen t, bei denen t.STATUS = UP}
wobei N die primäre Datenbank für die Fernsprechvermittlungsanlage bezeichnet, N.STATUS das Status-Flag für die Datenbank N in der Aufzeichnung der Datenbanken ist, die an der Fernsprechvermittlungsanlage gehalten ist, t eine gegebene eine der Datenbanken außer N, in dem Telekommunikationsnetzwerk bezeichnet, und t.STATUS das Status-Flag für die Aufzeichnung der Datenbank t, die in der Fernsprechvermittlungsanlage gehalten wird, bezeichnet.

15. Telekommunikationsnetzwerk nach einem der vorstehenden Ansprüche,
**dadurch gekennzeichnet, dass** das Telekommunikationssystem so ausgebildet ist, dass es ein Frei-Nummer-System betreibt, und dass die Datenbanken für jeden Teilnehmer an dem Telekommunikationsnetzwerk eine Konkordanzaufzeichnung enthalten, indem eine logische Nummer, die von anderen zum Auslösen von Anrufen an den Teilnehmer verwendet wird, und eine physikalische Nummer, die von dem Telekommunikationsnetzwerk zur Identifizierung eines Zugangspunktes für den Teilnehmer verwendet wird, verknüpft sind.

16. Fernsprechvermittlungsanlage (2), die so ausgebildet ist, dass sie innerhalb eines Telekommunikationsnetzwerkes arbeiten kann, mit einer Anzahl m Femsprechvermittlungsanlagen und einer Anzahl n identischer Datenbanken (1), wobei m größer als n ist, wobei die Fernsprechvermittlungsanlage (2) so angeordnet ist, dass sie in einem vorgegebenen Zeitpunkt auf eine einzelne Datenbank (1) zugreifen kann, wobei die Fernsprechvermittlungsanlage (2) Information hat, die Adresse und Status für jede Datenbank (1) in dem Telekommunikationsnetzwerk spezifiziert, und die Datenbank (1), auf die die Femsprechvermittlungsanlage (2) zugreifen will durch die Fernsprechvermittlungsanlage (2) auf einer dynamischen Basis gewählt wird,
**dadurch gekennzeichnet, dass** die Fernsprechvermittlungsanlage (2) so angeordnet ist, dass sie überwacht, welche Datenbanken (1) für sie zugreifbar sind, und dass die Datenbank (1), auf welche zugegriffen werden soll, durch die Fernsprechvermittlungsanlage (2) gewählt wird.

17. Fernsprechvermittlungsanlage nach Anspruch 16,
**dadurch gekennzeichnet, dass** die Datenbank, auf die zu einem vorgegebenen Zeitpunkt durch die Fernsprechvermittlungsanlage zugegriffen wird, auf einer dynamischen Zufallsbasis gewählt wird.

18. Fernsprechvermittlungsanlage nach Anspruch 16 oder 17,
**dadurch gekennzeichnet, dass** wenn eine Datenbank, die durch die Fernsprechvermittlungsanlage gewählt ist, ausfällt oder sich verschlechtert, die Fernsprechvermittlungsanlage eine neue Datenbank auf einer Zufallsbasis wählen kann.

19. Fernsprechvermittlungsanlage nach einem der Ansprüche 16 bis 18,
**dadurch gekennzeichnet, dass** die Fernsprechvermittlungsanlage anfänglich einer bevorzugten oder primären Datenbank zugewiesen ist.

20. Fernsprechvermittlungsanlage nach Anspruch 19,
**dadurch gekennzeichnet, dass** wenn eine Datenbank, die ausgefallen ist, in die Leitung gelangt, und wenn diese Datenbank der besagten Fernsprechvermittlungsanlage als primäre Datenbank zugewiesen war, die Fernsprechvermittlungsanlage diese Datenbank für die Datenzugangsoperationen von der Fernsprechvermittlungsanlage wieder wählen kann.

21. Fernsprechvermittlungsanlage nach Anspruch 19 oder 20,
**dadurch gekennzeichnet, dass** die Fernsprechvermittlungsanlage Mittel zum identifizieren hat, wann ihre primäre Datenbank nicht zur Verfügung steht, Mittel zum Identifizieren hat, welche der Datenbanken in dem Telekommunikationsnetzwerk zur Verfügung stehen, und Mittel zum Detektieren hat, wann eine Datenbank, die nicht zur Verfügung stand, zur Verfügung gelangt.

22. Fernsprechvermittlungsanlage nach Anspruch 16 bis 21,
**dadurch gekennzeichnet, dass** die Fernsprechvermittlungsanlage so ausgebildet ist, dass sie für jede Datenbank in dem Telekommunikationsnetzwerk eine Aufzeichnung durchführen kann, die für jede Datenbank einen Namen, eine Adresse und ein Status-Flag enthält, wobei der Name ein logischer Name für die Datenbank ist und das Status-Flag anzeigt, ob von der Fernsprechvermittlungsanlage derzeit auf die Datenbank zugegriffen werden kann oder nicht.

23. Fernsprechvermittlungsanlage nach Anspruch 22, **dadurch gekennzeichnet, dass** die Adresse eine IP-Adresse ist.

24. Fernsprechvermittlungsanlage nach Anspruch 22 oder 23,
**dadurch gekennzeichnet, dass** die Fernsprechvermittlungsanlage in einem Herzschlagverfahren betrieben werden kann, bei dem fortlaufend ein Herzschlag überwacht wird, der durch jede der Datenbanken in dem Netzwerk übertragen wird, und wenn für eine gegebene Datenbank eine Änderung des Status vorhanden ist, die Fernsprechvermittlungsanlage das Status-Flag in der Aufzeichnung für die Datenbank modifizieren kann.

25. Fernsprechvermittlungsanlage nach Anspruch 24,
**dadurch gekennzeichnet, dass** die Fernsprechvermittlungsanlage so ausgebildet ist, dass sie für den Fall einer Änderung des Status einer Datenbank, die ein Strom_Knoten für die Fernsprechvermittlungsartlage ist, einen neuen Strom_Knoten gemäß der folgenden Regel wählen kann:
Strom_Knoten = {N wenn N.STATUS = UP, sonst Zufallswählen einer neuen Datenbank unter allen t, bei denen t.STATUS = UP}
wobei N die primäre Datenbank für die Fernsprechvermittlungsanlage bezeichnet, N.STATUS das Status-Flag für die Datenbank N in der Aufzeichnung der Datenbanken, welche in der Fernsprechvermittlungsanlage gehalten wird, bezeichnet, t eine gegebene eine Datenbank, außer der Datenbank N, in dem Telekommunikationsnetzwerk bezeichnet, und t.STATUS das Status-Flag für die Aufzeichnung der Datenbank t bezeichnet, die in der Fernsprechvermittlungsanlage gehalten ist.

26. Datenbank (1), die innerhalb eines Telekommunikationsnetzwerkes betrieben werden kann, mit einer Anzahl m Fernsprechvermittlungsanlagen (2) und einer Anzahl n identischer Datenbanken (1), wobei m größer als n ist, wobei die Fernsprechvermittlungsanlage (2) so angeordnet sind, dass zu einem gegebenen Zeitpunkt jede Fernsprechvermittlungsanlage auf eine einzelne Datenbank (1) zugreifen kann,
**dadurch gekennzeichnet, dass** sie so angeordnet ist, dass sie ein Signal des Zustandes geben kann, welches darüber informiert, dass auf diese Datenbank (1) durch eine Fernsprechvermittlungsanlage (2) zugegriffen werden kann, die dieses Signal des Zustandes empfangen kann, wenn das Telekommunikationsnetzwerk in einen ersten und einen zweiten Bereich unterteilt ist, und zwar als Ergebnis eines Kommunikationsausfalls, dergestalt, dass auf Datenbanken (1) in dem ersten Bereich durch die Fernsprechvermittlungsanlage (2) in dem zweiten Bereich nicht zugegriffen werden kann, wobei die Datenbank (1) Mittel hat, um zu bestimmen, wie viele Fernsprechvermittlungsanlagen (2) auf sie zugreifen können, und dass Mittel vorgesehen sind, um zu unterbinden, dass diese Datenbank (1) aktualisiert werden kann, wenn nur die Hälfte oder weniger der Femsprechvermittlungsanlagen (2) in dem Telekommunikationsnetzwerk auf diese zugreifen können.

27. Datenbank nach Anspruch 26,
**dadurch gekennzeichnet, dass**, wenn der zweite Bereich mehr als die Hälfte der Fernsprechvermittlungsanlagen enthält und der zweite Bereich ferner als Ergebnis eines Kommunikationsausfalls in dritte und vierte Bereiche unterteilt ist, und eine Mehrheit der Fernsprechvermittlungsanlagen in dem zweiten Bereich innerhalb des dritten Bereiches liegen, Mittel vorgesehen sind, um Aktualisierungen der Datenbank zu unterbinden, wenn diese in dem vierten Bereich betrieben ist.

28. Datenbank nach Anspruch 26 oder 27,
**dadurch gekennzeichnet, dass** Mittel vorgesehen sind, um sicherzustellen, dass, wenn die Datenbank ausgefallen ist oder innerhalb eines isolierten Bereiches des Telekommunikationsnetzwerkes liegt und im Begriff ist, in die vollständige Betriebseffektivität zurückzukehren, diese Datenbank initialisiert wird, sodass ihre Inhalte identisch mit einer anderen Datenbank innerhalb des Telekommunikationsnetzwerkes sind, die derzeit vollständig in Betrieb ist, bevor irgendeine Fernsprechvermittlungsanlage auf diese Datenbank zugreifen darf.

29. Verfahren zum Betreiben eines Telekommunikationssystems mit einer Anzahl m Fernsprechvermittlungsanlagen (2) und einer Anzahl n identischer Datenbanken (1), wobei m größer als n ist, wobei jede Fernsprechvermittlungsanlage (2) zu einem gegebenem Zeitpunkt auf eine Datenbank (1) zugreifen kann, die jede Fernsprechvermittlungsanlage (2) mit Information versorgt, die eine Adresse und den Status für jede Datenbank (1) in dem Telekommunikationsnetzwerk spezifiziert, **gekennzeichnet durch** die Schritte Überwachen **durch** jede Fernsprechvermittlungsanlage (2), auf welche Datenbank **durch** die Femsprechvermittlungsanlage (2) zugegriffen werden kann, und dynamisches Wählen der Datenbank (1) auf welche sie zugreifen will **durch** jede Fernsprechveimittlungsanlage (2).

30. Verfahren nach Anspruch 29, **dadurch gekennzeichnet, dass** jede Fernsprechvermittlungsanlage zu einem gegebenen Zeitpunkt auf einer dynamischen Zufallsbasis die Datenbank wählt, auf welche sie zugreifen will.

31. Verfahren nach Anspruch 29 oder 30, **dadurch gekennzeichnet, dass** eine Fernsprechvermittlungsanlage, wenn die durch diese Fernsprechvermittlungsanlage gewählte Datenbank ausfällt oder zusammenbricht, eine neue Datenbank auf einer Zufallsbasis wählt.

32. Verfahren nach einem der Ansprüche 29 bis 31, **gekennzeichnet durch** anfängliches Zuordnen einer bevorzugten oder primären Datenbank zu jeder Fernsprechvermittlungsanlage.

33. Verfahren nach einem der Ansprüche 29 bis 32, **gekennzeichnet durch** Zuordnen einer bevorzugten Datenbank zu jeder der m Fernsprechvermittlungsanlagen auf einer Zufallsbasis, dergestalt, dass jede Datenbank eine ähnliche Ladung in Termen der Zugangstransaktionen, die an sie adressiert sind, hat.

34. Verfahren nach Anspruch 32 oder 33, wenn abhängig von Patentanspruch 32,
**dadurch gekennzeichnet, dass** wenn eine Datenbank, die ausgefallen ist, in die Leitung gelangt, jede Fernsprechvermittlungsanlage, die diese Datenbank als ihre primäre Datenbank bezeichnet hat, diese Datenbank für Datenzugangsoperationen wieder wählt.

35. Verfahren nach Anspruch 33 oder 34, **dadurch gekennzeichnet, dass** jede Fernsprechvermittlungsanlage identifiziert, wann ihre primäre Datenbank nicht zur Verfügung steht, identifiziert, welche der Datenbanken in dem Telekommunikationsnetzwerk zur Verfügung stehen und detektiert, wann eine Datenbank, die nicht zur Verfügung stand, zur Verfügung gelangt.

36. Verfahren nach einem der Ansprüche 29 bis 35,
**dadurch gekennzeichnet, dass**, wenn das Telekommunikationsnetzwerk in einen ersten und einen zweiten Bereich unterteilt ist als Ergebnis eines Kommunikationsausfalls, sodass Datenbanken in dem ersten Bereich für Fernsprechvermittlungsanlagen aus dem zweiten Bereich nicht zugänglich sind, jede Datenbank bestimmt, wie viele Fernsprechvermittlungsanlagen auf sie zugreifen können, und Aktualisierungen an dieser Datenbank untersagt, wenn nur die Hälfte oder weniger der Fernsprechvermittlungsanlagen in dem Telekommunikationsnetzwerk auf diese Datenbank zugreifen können.

37. Verfahren nach Anspruch 36, **dadurch gekennzeichnet, dass**, wenn der zweite Bereich mehr als die Hälfte der Fernsprechvermittlungsanlagen enthält und der zweite Bereich weiter als Ergebnis eines Kommunikationsausfalls in dritte und vierte Bereiche unterteilt ist, und eine Mehrheit der Fernsprechvermittlungsanlagen in dem zweiten Bereich innerhalb des dritten Bereichs sind, Aktualisierungen der Datenbanken, welche in dem vierten Bereich arbeiten, untersagt werden.

38. Verfahren nach Anspruch 36 oder 37,
**dadurch gekennzeichnet, dass** sichergestellt wird, dass, wenn eine Datenbank, die ausgefallen ist, oder die innerhalb eines isolierten Bereiches des Telekommunikationsnetzwerkes gewesen ist, im Begriff ist, in die volle Betriebseffektivität zurückzukehren, diese Datenbank initialisiert wird, sodass ihre Inhalte identisch mit einer anderen Datenbank innerhalb des Telekommunikationsnetzwerkes sind, die derzeit voll betriebsfähig ist, bevor irgendeine Fernsprechvermittlungsanlage auf diese Datenbank zugreifen darf.

39. Verfahren nach einem der Ansprüche 29 bis 38,
**dadurch gekennzeichnet, dass** jede Fernsprechvermittlungsanlage in dem Telekommunikationsnetzwerk eine Aufzeichnung für jede Datenbank in dem Telekommunikationsnetzwerk durchführt, die für jede Datenbank einen Namen, eine Adresse und ein Status-Flag enthält, wobei der Name ein logischer Name für die Datenbank ist und das Status-Flag anzeigt, ob die Datenbank derzeit für diese Fernsprechvermittlungsanlage zugänglich ist oder nicht.

40. Verfahren nach Anspruch 39, **dadurch gekennzeichnet, dass** diese Adresse eine IP-Adresse ist.

41. Verfahren nach einem der Ansprüche 39 oder 40,
**dadurch gekennzeichnet, dass** jede Fernsprechvermittlungsanlage in dem Netzwerk in einem Herzschlag-Verfahren arbeitet, das fortlaufend einen Herzschlag überwacht, der durch jede Datenbank in dem Netzwerk übertragen wird, und wenn, eine Änderung des Status für eine vorgegebene Datenbank vorhanden ist, das Status-Flag in der Aufzeichnung für die Datenbank modifiziert.

42. Verfahren nach Anspruch 41,
**dadurch gekennzeichnet, dass** jede Fernsprechvermittlungsanlage in dem Telekommunikationsnetzwerk für den Fall einer Änderung des Status einer Datenbank, die ein Strom_Knoten für die Fernsprechvermittlungsanlage ist, einen neuen Strom_Knoten wählt, gemäß der folgenden Regel:
Strom_Knoten = {N wenn N.STATUS = UP, sonst Zufallswählen einer neuen Datenbank unter allen t, bei denen t.STATUS = UP}
wobei N die primäre Datenbank für die Fernsprechvermittlungsanlage bezeichnet, N.STATUS das Status-Flag für die Datenbank N in der Aufzeichnung der Datenbanken ist, die in der Fernsprechvermittlungsanlage gehalten wird, t eine gegebene eine Datenbank außer der Datenbank N in dem Telekommunikationsnetzwerk bezeichnet, und t.STATUS das Status-Flag für die Aufzeichnung der Datenbank t bezeichnet, die in der Femsprechvermittlungsanlage gehalten ist.

43. Telekommunikationssystem **dadurch gekennzeichnet, dass** es ein Telekommunikationsnetzwerk nach einem der Patentansprüche 1 bis 15 enthält oder eine Fernsprechvermittlungsanlage nach einem der Patentansprüche 16 bis 25, oder eine Datenbank wie nach einem der Ansprüche 26 bis 28 beansprucht, enthält.

44. Telekommunikationssystem **dadurch gekennzeichnet, dass** es Mittel enthält, die so ausgebildet sind, dass sie alle Schritte eines Verfahrens wie nach einem der Patentansprüche 29 bis 42 beansprucht, durchführen können.

## Revendications

1. Réseau de télécommunications, comprenant une multiplicité de centraux téléphoniques (2), m, et une pluralité de bases de données identiques (1), n, où m est supérieur à n, dans lequel chaque central téléphonique (2) est adapté, à un moment donné, pour accéder à une base de données (1), chaque central téléphonique (2) possède des informations spécifiant une adresse et un état pour chaque base de données (1) dans le réseau de télécommunications, et la base de données (1) accédée par un central téléphonique (2) est sélectionnée sur une base dynamique par ce central téléphonique (2), **caractérisé en ce que** chaque central téléphonique (2) est disposé pour superviser quelles bases de données (1) sont accessibles audit central téléphonique (2) et **en ce que** la base de données (1) devant être accédée est choisie par le central téléphonique (2).

2. Réseau de télécommunications selon la revendication 1, **caractérisé en ce que** la base de données qui sera accédée, à un moment donné, par chaque central téléphonique, est sélectionnée sur une base dynamique aléatoire.

3. Réseau de télécommunications selon la revendication 1, ou la revendication 2, **caractérisé en ce que** lorsqu'une base de données sélectionnée par un central téléphonique subit une défaillance, ou tombe en panne, le central téléphonique est adapté pour sélectionner une nouvelle base de données sur une base aléatoire.

4. Réseau de télécommunications selon l'une quelconque des revendications précédentes, **caractérisé en ce que** chaque central téléphonique est initialement associé à une base de données préférée, ou primaire.

5. Réseau de télécommunications selon l'une quelconque des revendications précédentes, **caractérisé en ce que** m centraux téléphoniques sont associés aux bases de données préférées sur une base aléatoire, de telle manière que chaque base de données ait un chargement similaire en termes de transactions d'accès qui y sont adressées.

6. Réseau de télécommunications selon la revendication 4, ou la revendication 5 lorsque dépendante de la revendication 4, **caractérisé en ce que** lorsqu'une base de données qui a subi une défaillance arrive en ligne, chaque central téléphonique, qui a cette base de données désignée comme sa base de données primaire, est adapté pour resélectionner cette base de données pour des opérations d'accès aux données.

7. Réseau de télécommunications selon la revendication 5, ou la revendication 6, **caractérisé en ce que** chaque central téléphonique possède des moyens pour identifier lorsque sa base de données primaire est indisponible, des moyens pour identifier quelles bases de données dans le réseau de télécommunications sont disponibles, et des moyens pour détecter lorsqu'une base de données qui a été indisponible, devient disponible.

8. Réseau de télécommunications selon l'une quelconque des revendications précédentes, **caractérisé en ce que** lorsque ledit réseau de télécommunications est découpé en une première et une deuxième partition, à la suite d'une interruption des communications, tel que les bases de données dans ladite première partition ne peuvent pas être accédées depuis les centraux téléphoniques dans ladite deuxième partition, chaque base de données possède des moyens pour permettre que cette base de données détermine combien de centraux téléphoniques peuvent accéder à la base de données, et **en ce que** des moyens sont pourvus pour empêcher les mises à jour de ladite base de données, dans ladite première partition, lorsque seulement la moitié, ou moins, des centraux téléphoniques dans ledit réseau de télécommunications peuvent accéder à la base de données.

9. Réseau de télécommunications selon la revendication 8, **caractérisé en ce que** si ladite deuxième partition comprend plus de la moitié desdits centraux téléphoniques, et ladite deuxième partition est encore découpée, à la suite d'une interruption des communications, en troisième et quatrième partitions, et une majorité des centraux téléphoniques dans ladite deuxième partition sont à l'intérieur de ladite troisième partition, des moyens sont pourvus pour empêcher les mises à jour desdites bases de données fonctionnant dans ladite quatrième partition.

10. Réseau de télécommunications selon soit la revendication 8, soit la revendication 9, **caractérisé en ce que** des moyens sont pourvus pour s'assurer que, lorsqu'une base de données qui a subi une défaillance, ou a été à l'intérieur d'une partition isolée dudit réseau de télécommunications, est sur le point de retourner à une totale efficacité opérationnelle, ladite base de données est initialisée de sorte que son contenu soit identique avec une autre base de données, à l'intérieur dudit réseau de télécommunications, qui est actuellement totalement opérationnel, avant qu'un central téléphonique quelconque ne soit autorisé à accéder à ladite base de données.

11. Réseau de télécommunications selon l'une quelconque des revendications précédentes, **caractérisé en ce que** chaque central téléphonique dans ledit réseau de télécommunications est adapté pour acheminer un enregistrement, pour chaque base de données dans ledit réseau de télécommunications, et comprenant, pour chaque base de données, un nom, une adresse et un indicateur d'état, où le nom est un nom logique pour la base de données et l'indicateur d'état indique si la base de données est actuellement accessible ou non depuis ledit central téléphonique.

12. Réseau de télécommunications selon la revendication 11, **caractérisé en ce que** ladite adresse est une adresse IP.

13. Réseau de télécommunications selon soit la revendication 11, soit la revendication 12, **caractérisé en ce que** chaque central téléphonique dans ledit réseau est adapté pour opérer un processus de battement de coeur qui surveille continuellement un battement de coeur transmis par chaque base de données dans ledit réseau et, s'il y a un changement d'état pour une base de données donnée, est adapté pour modifier l'indicateur d'état dans l'enregistrement pour cette base de données.

14. Réseau de télécommunications selon la revendication 11, **caractérisé en ce que** chaque central téléphonique dans ledit réseau de télécommunications est adapté, dans le cas d'un changement d'état d'une base de données qui est un Noeud_Actuel pour ledit central téléphonique, pour sélectionner un nouveau Noeud_Actuel selon la règle suivante :
Noeud_Actuel = {N si N.ETAT = OPERATIONNEL, sinon sélectionne de manière aléatoire une nouvelle base de données parmi tous les t, où t.ETAT = OPERATIONNEL}
où N indique la base de données primaire pour le central téléphonique, N.ETAT est l'indicateur d'état pour la base de données N dans l'enregistrement des bases de données maintenues au niveau du central téléphonique, t indique une base de données donnée des bases de données dans le réseau de télécommunications, autre que N, et t.ETAT indique l'indicateur d'état pour l'enregistrement de la base de données t maintenue au niveau du central téléphonique.

15. Réseau de télécommunications selon l'une quelconque des revendications précédentes, **caractérisé en ce que** ledit système de télécommunications est adapté pour exploiter un système à numéros libres, et **en ce que** lesdites bases de données comprennent un enregistrement de concordance, pour chaque abonné audit réseau de télécommunications, reliant un numéro logique utilisé par d'autres pour émettre des appels vers un abonné, et un numéro physique utilisé par le réseau de télécommunications pour identifier un point d'accès pour cet abonné.

16. Central téléphonique (2), adapté pour fonctionner à l'intérieur d'un réseau de télécommunications, comprenant une multiplicité de centraux téléphoniques (2), m, et une pluralité de bases de données identiques (1), n, où m est supérieur à n, ledit central téléphonique (2) étant disposé de sorte que, à un moment donné, il soit adapté pour accéder à une seule base de données (1), ledit central téléphonique (2) possède des informations spécifiant une adresse et un état pour chaque base de données (1) dans le réseau de télécommunications, et la base de données (1) qui sera accédée par le central téléphonique (2) est sélectionnée par le central téléphonique (2) sur une base dynamique, **caractérisé en ce que** le central téléphonique (2) est disposé pour superviser quelles bases de données (1) lui sont accessibles et **en ce que** la base de données (1) devant être accédée est choisie par le central téléphonique (2).

17. Central téléphonique selon la revendication 16, **caractérisé en ce que** la base de données qui sera accédée, à un moment donné, par ledit central téléphonique, est sélectionnée sur une base dynamique aléatoire.

18. Central téléphonique selon la revendication 16, ou la revendication 17, **caractérisé en ce que** lorsqu'une base de données sélectionnée par le central téléphonique subit une défaillance, ou tombe en panne, le central téléphonique est adapté pour sélectionner une nouvelle base de données sur une base aléatoire.

19. Central téléphonique selon l'une quelconque des revendications 16 à 18, **caractérisé en ce que** ledit central téléphonique est initialement associé à une base de données préférée, ou primaire.

20. Central téléphonique selon la revendication 19, **caractérisé en ce que** lorsqu'une base de données qui a subi une défaillance arrive en ligne, et si cette base de données a été désignée comme la base de données primaire pour ledit central téléphonique, ledit central téléphonique est adapté pour resélectionner cette base de données pour des opérations d'accès aux données depuis ledit central téléphonique.

21. Central téléphonique selon la revendication 19, ou 20, **caractérisé en ce que** ledit central possède des moyens pour identifier lorsque sa base de données primaire est indisponible, des moyens pour identifier quelles bases de données dans le réseau de télécommunications sont disponibles, et des moyens pour détecter lorsqu'une base de données qui a été indisponible, devient disponible.

22. Central téléphonique selon l'une des revendications 16 à 21, **caractérisé en ce que** ledit central téléphonique est adapté pour acheminer un enregistrement, pour chaque base de données dans ledit réseau de télécommunications, comprenant, pour chaque base de données, un nom, une adresse et un indicateur d'état, où le nom est un nom logique pour la base de données et l'indicateur d'état indique si la base de données est actuellement accessible ou non depuis ledit central téléphonique.

23. Central téléphonique selon la revendication 22, **caractérisé en ce que** ladite adresse est une adresse IP.

24. Central téléphonique selon soit la revendication 22, soit la revendication 23, **caractérisé en ce que** ledit central téléphonique est adapté pour opérer un processus de battement de coeur qui surveille continuellement un battement de coeur transmis par chaque base de données dans ledit réseau et, s'il y a un changement d'état pour une base de données donnée, il est adapté pour modifier l'indicateur d'état dans l'enregistrement pour cette base de données.

25. Central téléphonique selon la revendication 24, **caractérisé en ce que** ledit central téléphonique est adapté, dans le cas d'un changement d'état d'une base de données qui est un Noeud_Actuel pour le central téléphonique, pour sélectionner un nouveau Noeud_Actuel selon la règle suivante :
Noeud_Actuel = {N si N.ETAT = OPERATIONNEL, sinon sélectionne de manière aléatoire une nouvelle base de données parmi tous les t, où t.ETAT = OPERATIONNEL}
où N indique la base de données primaire pour le central téléphonique, N.ETAT est l'indicateur d'état pour la base de données N dans l'enregistrement des bases de données maintenues au niveau du central téléphonique, t indique une base de données donnée des bases de données dans le réseau de télécommunications, autre que N, et t.ETAT indique l'indicateur d'état pour l'enregistrement de la base de données t maintenue au niveau du central téléphonique.

26. Base de données (1), adaptée pour fonctionner à l'intérieur d'un réseau de télécommunications, comprenant une multiplicité de centraux téléphoniques (2), m, et une pluralité de bases de données identiques (1), n, où m est supérieur à n, ledit central téléphonique (2) étant disposé de sorte que, à un moment donné, chaque central téléphonique (2) puisse accéder à une seule base de données (1), **caractérisée en ce qu'**elle est disposée pour donner un signal d'état qui informe que cette base de données (1) est accessible à un central téléphonique (2) qui peut recevoir ce signal d'état lorsque ledit réseau de télécommunications est découpé en une première et une deuxième partition, à la suite d'une interruption des communications, tel que les bases de données (1) dans ladite première partition ne peuvent pas être accédées depuis les centraux téléphoniques (2) dans ladite deuxième partition, ladite base de données (1) possèdant des moyens pour déterminer combien de centraux téléphoniques (2) peuvent y accéder, et **en ce que** des moyens sont pourvus pour empêcher les mises à jour de ladite base de données (1) lorsque seulement la moitié, ou moins, des centraux téléphoniques (2) dans ledit réseau de télécommunications peuvent y accéder.

27. Base de données selon la revendication 26, **caractérisée en ce que** si ladite deuxième partition comprend plus de la moitié desdits centraux téléphoniques, et ladite deuxième partition est encore découpée, à la suite d'une interruption des communications, en troisième et quatrième partitions, et une majorité des centraux téléphoniques dans ladite deuxième partition sont à l'intérieur de ladite troisième partition, des moyens sont pourvus pour empêcher les mises à jour de ladite base de données si elle fonctionne dans ladite quatrième partition.

28. Base de données selon la revendication 26, ou la revendication 27, **caractérisée en ce que** des moyens sont pourvus pour s'assurer que, lorsque ladite base de données qui a subi une défaillance, ou a été à l'intérieur d'une partition isolée dudit réseau de télécommunications, et est sur le point de retourner à une totale efficacité opérationnelle, ladite base de données est initialisée de sorte que son contenu soit identique avec une autre base de données, à l'intérieur dudit réseau de télécommunications, qui est actuellement totalement opérationnel, avant qu'un central téléphonique quelconque ne soit autorisé à accéder à ladite base de données.

29. Procédé d'exploitation d'un système de télécommunications comprenant une multiplicité de centraux téléphoniques (2), m, et une pluralité de bases de données identiques (1), n, où m est supérieur à n, dans lequel chaque central téléphonique (2) est adapté, à un moment donné, pour accéder à une base de données (1), en fournissant à chaque central téléphonique (2) des informations spécifiant une adresse et un état pour chaque base de données (1) dans le réseau de télécommunications, **caractérisé par** les étapes consistant en ce que chaque central téléphonique (2) supervise quelles bases de données (1) sont accessibles audit central téléphonique (2) et en ce que chaque central téléphonique (2) sélectionne dynamiquement la base de données (1) à laquelle il accèdera.

30. Procédé selon la revendication 29, **caractérisé en ce que** chaque central téléphonique sélectionne la base de données à laquelle il accèdera, à un moment donné, sur une base dynamique aléatoire.

31. Procédé selon la revendication 29, ou 30, **caractérisé en ce qu'**un central téléphonique, lorsqu'une base de données sélectionnée par ce central téléphonique subit une défaillance, ou tombe en panne, sélectionne une nouvelle base de données sur une base aléatoire.

32. Procédé selon l'une quelconque des revendications 29 à 31, **caractérisé par** l'association initiale de chaque central téléphonique à une base de données préférée, ou primaire.

33. Procédé selon l'une quelconque des revendications 29 à 32, **caractérisé par** l'association de chacun desdits m centraux téléphoniques à une base de données préférée, sur une base aléatoire, de telle manière que chaque base de données ait un chargement similaire en termes de transactions d'accès qui y sont adressées.

34. Procédé selon la revendication 32, ou la revendication 33 lorsque dépendante de la revendication 32, **caractérisé en ce que** lorsqu'une base de données qui a subi une défaillance arrive en ligne, chaque central téléphonique qui a cette base de données désignée comme sa base de données primaire, resélectionne cette base de données pour des opérations d'accès aux données.

35. Procédé selon la revendication 33, ou la revendication 34, **caractérisé en ce que** chaque central téléphonique identifie lorsque sa base de données primaire est indisponible, identifie quelles bases de données dans le réseau de télécommunications sont disponibles, et détecte lorsqu'une base de données qui a été indisponible, devient disponible.

36. Procédé selon l'une quelconque des revendications 29 à 35, **caractérisé en ce que** lorsque ledit réseau de télécommunications est découpé en une première et une deuxième partition, à la suite d'une interruption des communications, tel que les bases de données dans ladite première partition ne peuvent pas être accédées depuis les centraux téléphoniques dans ladite deuxième partition, chaque base de données détermine combien de centraux téléphoniques peuvent y accéder, et empêche les mises à jour de ladite base de données, lorsque seulement la moitié, ou moins, des centraux téléphoniques dans ledit réseau de télécommunications peuvent accéder à la base de données.

37. Procédé selon la revendication 36, **caractérisé en ce que**, si ladite deuxième partition comprend plus de la moitié desdits centraux téléphoniques, et ladite deuxième partition est encore découpée, à la suite d'une interruption des communications, en troisième et quatrième partitions, et une majorité des centraux téléphoniques dans ladite deuxième partition sont à l'intérieur de ladite troisième partition, les mises à jour des bases de données fonctionnant dans ladite quatrième partition sont empêchées.

38. Procédé selon soit la revendication 36, soit la revendication 37, **caractérisé en ce que** l'on s'assure que, lorsqu'une base de données qui a subi une défaillance, ou a été à l'intérieur d'une partition isolée dudit réseau de télécommunications, est sur le point de retourner à une totale efficacité opérationnelle, ladite base de données est initialisée de sorte que son contenu soit identique avec une autre base de données à l'intérieur dudit réseau de télécommunications qui est actuellement totalement opérationnel, avant qu'un central téléphonique quelconque ne soit autorisé à accéder à ladite base de données.

39. Procédé selon l'une quelconque des revendications 29 à 38, **caractérisé en ce que** chaque central téléphonique dans ledit réseau de télécommunications achemine un enregistrement, pour chaque base de données dans ledit réseau de télécommunications, comprenant, pour chaque base de données, un nom, une adresse et un indicateur d'état, où le nom est un nom logique pour la base de données et l'indicateur d'état indique si la base de données est actuellement accessible ou non depuis ledit central téléphonique.

40. Procédé selon la revendication 39, **caractérisé en ce que** ladite adresse est une adresse IP.

41. Procédé selon soit la revendication 39, soit la revendication 40, **caractérisé en ce que** chaque central téléphonique dans ledit réseau opère un processus de battement de coeur qui surveille continuellement un battement de coeur transmis par chaque base de données dans ledit réseau et, s'il y a un changement d'état pour une base de données donnée, modifie l'indicateur d'état dans l'enregistrement pour cette base de données.

42. Procédé selon la revendication 41, **caractérisé en ce que** chaque central téléphonique dans ledit réseau de télécommunications, dans le cas d'un changement d'état d'une base de données qui est un Noeud_Actuel pour ledit central téléphonique, sélectionne un nouveau Noeud_Actuel selon la règle suivante :
Noeud_Actuel = {N si N.ETAT = OPERATIONNEL, sinon sélectionne de manière aléatoire une nouvelle base de données parmi tous les t, où t.ETAT = OPERATIONNEL}
où N indique la base de données primaire pour le central téléphonique, N.ETAT est l'indicateur d'état pour la base de données N dans l'enregistrement des bases de données maintenues au niveau du central téléphonique, t indique une base de données donnée des bases de données dans le réseau de télécommunications, autre que N, et t.ETAT indique l'indicateur d'état pour l'enregistrement de la base de données t maintenue au niveau du central téléphonique.

43. Système de télécommunications **caractérisé en ce qu'**il comprend un réseau de télécommunications selon l'une quelconque des revendications 1 à 15, ou comprend un central téléphonique selon l'une quelconque des revendications 16 à 25, ou une base de données selon l'une quelconque des revendications 26 à 28.

44. Système de télécommunications **caractérisé en ce qu'**il comprend des moyens adaptés pour exécuter toutes les étapes d'un procédé selon l'une quelconque des revendications 29 à 42.
